# EUROPEAN PATENT SPECIFICATION

(11) **EP 4 642 572 B1**
(45) Date of publication and mention of the grant of the patent: **11.11.2026**
(21) Application number: 23866621.8
(22) Date of filing: 06.12.2023
(51) Int. Cl.: B01L 3/00, F16K 99/00, G01N 15/10, B01L 7/00

(54) **A HYBRID MICROFLUIDIC CHIP AND USE THEREOF IN THE EARLY DIAGNOSIS OF CANCER-RELATED DISEASES**
HYBRIDER MIKROFLUIDISCHER CHIP UND VERWENDUNG DAVON BEI DER FRÜHDIAGNOSE VON KREBSBEDINGTEN ERKRANKUNGEN
PUCE MICROFLUIDIQUE HYBRIDE ET SON UTILISATION DANS LE DIAGNOSTIC PRÉCOCE DE MALADIES ASSOCIÉES AU CANCER

(30) Priority: 30.12.2022 TR 202221706
(43) Date of publication of application: 05.11.2025
(73) Proprietor: Sabanci Üniversitesi, 34956 Tuzla/Istanbul (TR); Sabanci Üniversitesi Nanoteknoloji Arastirma ve Uygulama Merkezi Sunum, 34956 Tuzla/Istanbul (TR); KOC Universitesi, 34450 Istanbul (TR)
(72) Inventor: KOSAR, Ali, 34956 Istanbul (TR); BUTUN, Ismail, 34956 Istanbul (TR); GHARIB, Ghazaleh, 34956 Istanbul (TR); NAMLI, Ilayda, 34956 Istanbul (TR); GHORBANI, Morteza, 34956 Istanbul (TR); CETINEL, Sibel, 34956 Istanbul (TR); KUTLU, Ozlem, 34956 Istanbul (TR); YAGCI ACAR, Havva, 34450 Istanbul (TR)
(74) Representative: Genç Ilhan, Oznur
(86) International application number: PCT/TR2023/051488
(87) International publication number: WO 2024/144631

(56) References cited:
- US-A1- 2011 030 808
- US-B2- 11 331 668
- LI PEIXIAN ET AL: "Physical properties-based microparticle sorting at submicron resolution using a tunable acoustofluidic device", SENSORS AND ACTUATORS B: CHEMICAL, ELSEVIER BV, NL, vol. 344, 29 May 2021 (2021-05-29), XP086703649, ISSN: 0925-4005, [retrieved on 20210529], DOI: 10.1016/J.SNB.2021.130203
- ANDERSON ET AL: "Thermally-Actuated Microfluidic Systems", JOURNAL OF THE ASSOCIATION FOR LABORATORY AUTOMATION, ELSEVIER, vol. 13, no. 2, 6 March 2008 (2008-03-06), pages 65 - 72, XP022513938, ISSN: 1535-5535, DOI: 10.1016/J.JALA.2007.11.001

## Description

### Technical Field of the Invention

The present invention relates to an acoustic-based microfluidic chip designed with advanced microchannel geometries, a biomarker analysis method using the chip of the invention, and use of the chip of the invention in the diagnosis of cancer and cancer-related diseases.

### Background of the Invention

The diagnosis of cancer is a very important stage for patients and early diagnosis is the most important criterion for the treatment of the disease. However, such factors as economic insufficiency, low awareness and low efficiency of diagnostic kits are some of the obstacles to early diagnosis. Especially in terms of economy and efficiency, cancer-related biomarkers appear to be prominent biomolecules in terms of cancer diagnosis.

Biomarkers are biomolecules allowing us to measure and determine the abnormal or normal biological state of an organism. These biomolecules can be nucleic acids such as DNA, RNA, and miRNA, proteins such as enzymes and receptors, peptides, antibodies and similar molecules. According to the World Health Organization, it is defined as "A biomarker is any substance, structure or process that can be measured in the body or its products and influence or predict the incidence of outcome or disease." Biomarkers can be detected in blood, excretion products, or body secretions. Cancer biomarkers allow us to measure the risk of cancer development and progression, as well as how effective the response to treatment is.

In the literature, some specific proteins are often associated with certain diseases. This is because protein biomarkers contain certain substances generated by cancer cells or cancercausing cells. The prominent methods used in the prior art for the diagnosis of cancer biomarkers are classified as enzyme-linked immunosorbent methods (ELISA), electrochemical and electrical detection methods, optical methods and other methods.

In biomedical and industrial applications, inertial microfluidics are employed due to their fast, uninterrupted and high-efficiency particle focusing and separation properties. In addition, low production costs make inertial microfluidic applications preferable. Some examples of such applications available in the literature are blood cell separation [Mach et al. 2010], isolation of cancer molecules [Ozbey A. et al. 2018], disease diagnosis and monitoring [Su et al. 2015], and biological processes [Martel et al. 2015]. However, in addition to these, it is necessary to use active systems to perform the separation processes in a controlled manner.

Biomarker analysis and diagnostic systems consist of multiple stages such as mixing, separation, enrichment, concentration and detection of biomarkers.

The use of surface acoustic waves for separation is known in the art. Surface acoustic waves are mechanical waves that are capable of carrying energy only in the medium. In this way, sound waves propagate only in the dense medium [Gwini et al. 2010]. Acoustophoresis, also known as the focusing of acoustic pressure points in a certain area, consists of the control, separation and manipulation of high-density materials with acoustic force [Gupta et al. 2019, Lenshof et al. 2015]. Accordingly, particles of different sizes in the solution are introduced through the microchannel inlets and are separated by acoustophoretic forces depending on their particle sizes. Acoustic radiation force (acoustophoretic force) manipulates the particles based on their volume, density and compressibility properties, ensuring that they are arranged at different distances from the pressure points and anti-pressure points. In this way, separated particles that have deviated from their trajectories move through the channel under the effect of the drag force caused by the liquid flow and exit from a different exit point [Kandemir et al. 2019].

Acoustopheric devices consist of three main structures: piezoelectric substrate, interdigital transducer (IDT), and microchannel. A RF signal with predetermined characteristics is applied to the IDT electrodes and stress/strain occurs within the piezoelectric crystal. As a result, surface acoustic waves (SAW) are formed. Said microchannel structure can be flat, ellipse, wavy, serpentine, and in many other shapes. For example, US2021129149A1 describes a microfluidic device, and a particle (e.g., cell) manipulation method based on acoustic motion wave, which is performed using said microfluidic device. Said device consists of a piezoelectric surface containing a microfluidic channel and a transducer (IDT). It has been described that said microfluidic channel diverges into multiple directions at the outlet, and its structure may include straight, ellipse, serpentine, or curved configurations.

However, in order to perform cell/protein analysis and detection, a number of steps are needed, such as mixing and coupling them with ligand-containing nanoparticles, as well as enrichment, concentration and separation thereof based on their physical properties. In view of the prior art applications, it is apparent that multiple microfluidic chips are used separately, or micro systems and non-micro systems are combined in order to conduct a complete analysis. In this sense, there is a need for innovative hybrid systems where all stages can be carried out on a single microdevice, increasing both efficiency and effectiveness.

### Objects of the Invention

The main object of the present invention is to provide a microfluidic chip suitable for use in the diagnosis of cancer and cancer-related diseases, which eliminates the above-mentioned deficiencies and disadvantages of the prior art.

Another object of the present invention is to provide a microfluidic chip for use in the analysis and diagnosis of biomarkers, which enables mixing, enrichment and separation of biomarkers and optical analysis thereof on a single device, thereby increasing operating efficiency.

Another object of the present invention is to provide a hybrid microfluidic chip comprising a passive micromixer and an active acoustic separator on a single microplatform, configured to operate in a coordinated manner for mixing and enrichment of biomarkers.

Another object of the present invention is to provide a hybrid microfluidic chip, also comprising a plurality of microorifice structures on the same microplatform, which enable an effective separation of biomarkers by concentrating them at high efficiency.

Another object of the present invention is to provide a method for manufacturing the microfluidic chip of the invention.

Another object of the present invention is to provide a biomarker analysis assembly comprising the microfluidic chip of the invention.

Another object of the present invention is to provide a biomarker analysis method used in the diagnosis of biomarkers, thanks to the said microfluidic chip, and using fast, reliable and lowcost optical diagnostic methods, instead of electrochemical methods that require costly external devices and systems such as potentiostats, electrical equipment, thin film coatings, chemical experiment setups.

Yet another object of the present invention is to provide a microfluidic chip that allows the use of optical diagnostic methods such as absorbance spectroscopy and/or fluorescence spectroscopy, and to provide a biomarker analysis method using the microfluidic chip. US 11 331 668 B2 and US 2011/030808 A1 show other relevant prior art documents.

### Brief Description of the Invention

The invention relates to a hybrid microfluidic chip suitable for use in the processing and analysis of biomarkers. The microfluidic chip comprises a passive micromixer, an active acoustic separator, and a plurality of microorifice structures, combined on a single platform. The invention also describes a biomarker analysis assembly comprising the microfluidic chip of the invention, which is suitable for use in the diagnosis of cancer and related diseases, and a biomarker analysis method using the microfluidic chip of the invention. The invention also relates to a method for manufacturing a hybrid microfluidic chip suitable for use in the processing and analysis of biomarkers.

### Brief Description of the Drawings

Figure 1 - A schematic view of the microfluidic chip (1) according to an embodiment of the invention.
Figure 2 - A cross-sectional view of the microfluidic chip (1) according to an embodiment of the invention, showing the integration of the microchannel structure (10) onto a platform (40) containing interdigital transducer electrodes (21).
Figure 3 - A cross-sectional view of the microorifice structure (30) according to an embodiment of the invention.

### Detailed Description of the Invention

The invention mainly describes a hybrid microfluidic chip (1) suitable for use in the processing and analysis of biomarkers, comprising multiple functional structures on a single platform (40) made of piezoelectric material, and providing ease of use and high reliability when used in the diagnosis of cancer.

The microfluidic chip (1) of the invention comprises, in combined manner;
- at least one microchannel structure (10) having a curved structure with at least one inlet channel (11) at one end and a plurality of outlet channels (12) at the other end,
- an interdigital transducer (20) configured to convert electrical waves into surface acoustic waves, comprising two electrodes (21) positioned immediately before the outlet channels (12) with respect to the flow direction,
- a microorifice structure (30) provided on at least one outlet channel (12), configured to contract and expand with a change of temperature.

Said piezoelectric material is preferably selected from a group comprising lithium niobate (LiNbO₃), lithium tantalate (LiTaO₃), and quartz. In the most preferred embodiment, said piezoelectric material is a lithium niobate material. Accordingly, a single platform (40) made of the said piezoelectric material is in the form of a plate made of LiNbO₃ material.

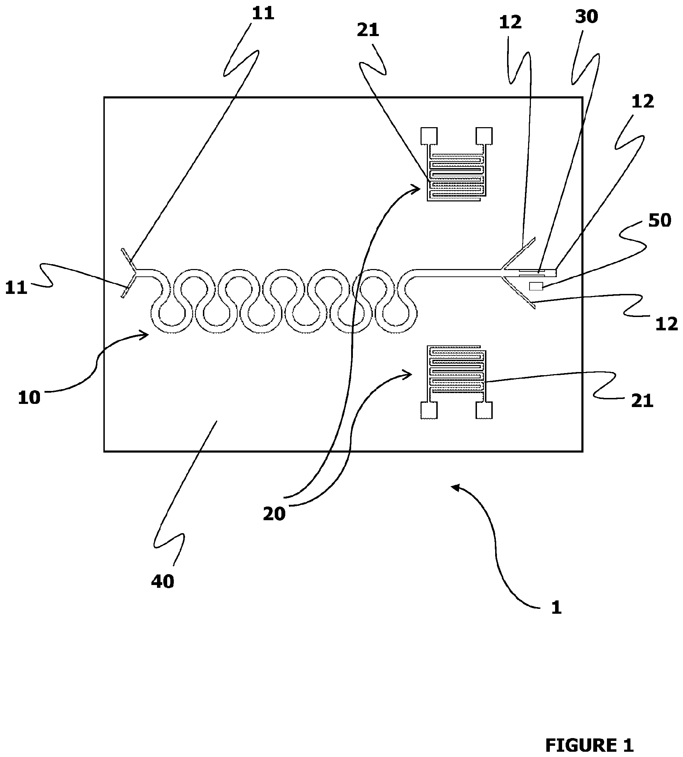

The microchannel structure (10) is configured in a suitable form so that, the biomarkers to be analyzed are, under the influence of inertial mixing and drag force, mixed with nanoparticles carrying ligands specific to these biomarkers and forming bonds, resulting in formation of nanoparticle-biomarker pairs. Accordingly, said at least one curved microchannel structure (10) has a serpentine and/or spiral and/or elliptical form. In the most preferred embodiment of the invention, the microchannel structure (10) has a serpentine form (Figure 1).

Inertial mixing is a passive technique in which curved microchannels utilize secondary Dean flows. This technique generates two counter-rotating vortices, also known as Dean vortices, causing induction and Dean drag force in the cross-section of the channels. The resulting Dean drag force and the net inertial force manipulate mixing.

The interdigital transducer (IDT) (20) ensures that nanoparticle-biomarker pairs are separated based on their size by the effect of acoustic radiation force and guided into the determined outlet channels (12). Here, the expression "based on their size" should be considered as relative to their volume and/or density and/or compressibility.

Surface acoustic waves (SAW) generated by the electrodes (21) of the interdigital transducer (20) are mechanical waves that are capable of moving the nanoparticle-biomarker pairs within the microchannel structure (11). Accordingly, the interdigital transducer (20) acts as an active acoustic separator on the nanoparticle-biomarker pairs that are mixed and coupled through the microchannel structure (10). Active acoustic separation, also called acoustic levitation or acoustophoresis, mainly involves controlling, separating and manipulating high-density materials by means of acoustic force.

In the preferred embodiment of the invention, said electrodes (21) are positioned opposite each other on both sides of the microchannel structure (10). According to this embodiment, an end of the microchannel structure (10) facing the outlet channels (12) remains between the two IDT electrodes (21) (Figure 1). In this embodiment, the electrodes (21) are positioned to generate surface acoustic waves (SAW) that overlap each other and create pressure points and anti-points within the microchannel structure (10). This effect causes the particles to move towards pressure points or anti-points based on their volume, density and compressibility properties.

In an embodiment of the invention, the microchannel structure (10) comprises three outlet channels (12) as shown in Figure 1. According to this embodiment, nanoparticle-biomarker pairs exit these three outlet channels (12) as separated from each other based on their size, by the SAW effect.

The inlet channel (11) ensures that biomarkers and nanoparticles carrying ligands specific to these biomarkers are fed into the microchannel structure (10). In the preferred embodiment of the invention, the microchannel structure (10) comprises two inlet channels (11), one is suitable for feeding of biomarkers and the other is suitable for feeding of nanoparticles, as shown in Figure 1.

In an embodiment of the invention, each outlet channel (12) is provided with a microorifice structure (30). Said microorifice structures (30) are flexible structures that can expand with temperature, and manufactured by the soft lithography technique.

In the preferred embodiment of the invention, the microfluidic chip (1) also comprises at least one heater (50), preferably positioned under the microorifice structure (30), which enables the microorifice structure (30) to be heated when desired. The heater (50) ensures a more effective aggregation and concentration of nanoparticle-biomarker pairs passing through the microorifice structure (30) when the microfluidic chip (1) is in use. Thus, the efficiency of nanoparticle-biomarker pairs outletted from the outlet channels (12) increases. Said heater (50) is preferably configured such that its heating capacity does not exceed 30°C. According to the preferred embodiment of the invention, the heater (50) is transparent. Thus, it provides the opportunity to view under a microscope. In another embodiment, an external heater can also be used to heat the microorifice structure (30).

According to any of these embodiments, the microfluidic chip (1) of the invention is configured to include a micromixer equipped with microorifice structures (30) and an acoustopheric microdevice on a single platform (40). Said micromixer mainly represents a microchannel structure (10) provided on a platform. Again, said acoustopheric microdevice mainly represents an interdigital transducer (20) provided on a platform.

The invention also describes a biomarker analysis assembly suitable for use in the diagnosis of cancer and related diseases, comprising a microfluidic chip (1) as in any of the embodiments above. The biomarker analysis assembly of the invention comprises the following elements, in addition to the microfluidic chip (1):
- a network analyzer for determining the characteristic features of the microdevice developed, by sending signals from one side and reading signals from the opposite electrode (21) to read the resonance frequency and impedance of the interdigital transducer (20),
- a signal generator acting as a signal source,
- a signal amplifier for increasing the strength of signals sent by the signal generator,
- at least one, preferably two, micropumps for feeding nanoparticles and biomarkers from the inlet channel (11) at a flow rate,
- collection containers allowing nanoparticle-biomarker pairs formed along the microchannel structure (10) to be collected from the outlet channels (12),
- an optical microscope enabling the observation of the movements of the nanoparticle-biomarker pairs in the collection containers and thus the diagnosis of the biomarkers.

In an embodiment of the invention, said micropump is capable of feeding nanoparticles and biomarkers at a flow rate in the range of 1-500 µL/min.

The signal generator, with the help of the RF (Radio Frequency) signal amplifier, provides power to the IDT electrodes (21) and generates surface acoustic waves in the piezoelectric material. The surface acoustic waves created by the use of the signal amplifier become more distinct. According to one embodiment of the invention, the signal amplifier provides a signal outlet of around 30dB. The incoming signal is applied to opposite electrodes (21) at the same time and with the same power, thus standing surface acoustic waves (SSAW) are formed within the microchannel structure (10) located between the electrodes (21) that generate acoustic waves of the same length. Nanoparticle and biomarker solutions pumped by the micropumps at a determined flow rate are mixed within the microchannel structure (10) with around 90% efficiency, and the target biomarkers are allowed to bind to the nanoparticles. Given that the size of interconnected nanoparticle-biomarker pairs is larger than that of the other free nanoparticles and biomarkers, the acoustophoretic force aligns such nanoparticles and pairs individually along the flow axis in different regions within the microchannel structure (10) based on their sizes. The particles dragged by the liquid pressure caused by the liquid flow are forced from different outlets and collected in separate collection containers. With the help of an optical microscope, the movement of particles are observed based on the liquid flow rate and acoustic radiation pressure in order to visualize the deviations and progressions in their trajectories.

In an embodiment of the invention, if gold nanoparticles (AuNP) are used to bind biomarkers, said optical microscope is an absorbance microscope.

In another embodiment of the invention, if quantum dots (QD) or carbon dots (CD) are used to bind biomarkers, said optical microscope is a fluorescence microscope used to analyze particles by using their photoluminescence properties.

The invention is also a biomarker analysis method using a microfluidic chip (1) as in any of the embodiments above, comprising the following steps:
i. Providing the biomarkers to be analyzed in order to prepare a biomarker solution
ii. Providing nanoparticles containing surface ligands in a form to capture the biomarkers in order to prepare a nanoparticle solution
iii. Feeding the biomarker solution into the microchannel structure (10) through an inlet channel (11)
iv. Feeding the nanoparticle solution into the microchannel structure (10) through another inlet channel (11)
v. Formation of nanoparticle-biomarker pairs by the micromixing effect to which the biomarkers and nanoparticles are subjected in the microchannel structure (10)
vi. Separation of the nanoparticle-biomarker pairs by means of the surface acoustic waves generated by the interdigital transducer (20), based on their size, while they move through the microchannel structure (10) under the influence of the drag force, and guiding them into different outlet channels (12)
vii. Simultaneous heating of the nanoparticle-biomarker pairs that have been separated based on their sizes, while they are passed through the microorifice structures (30) disposed in the outlet channels (12)
viii. Introducing the nanoparticle-biomarker pairs, which are aggregated by heating while being passed through the microorifice structure (30), into the collection containers
ix. Performing optical imaging of the nanoparticle-biomarker pairs introduced into the collection containers, and the diagnosis of the biomarkers

The biomarker solution in step (i) is an aqueous buffer solution. Said buffer solution may, for example, be PBS.

The nanoparticle solution in step (ii) is an aqueous buffer solution. Said buffer solution may, for example, be PBS. Again, the ligands in this step are consisted of amino acid structures such as protein, peptide, DNA and RNA.

The feedings in steps (iii) and (iv) are preferably carried out at a flow rate in the range of 1-500 µL/min.

The micromixing effect in step (v) occurs with the synergistic effect of the drag force resulting from the liquid flow and the acoustic radiation force resulting from the overlap of the surface acoustic waves generated by the electrodes (21) That is, two different forces act on biomarkers and nanoparticles. While the drag force causes the particles to drift along the microchannel structure (10), the acoustic radiation force manipulates the particles in a direction perpendicular to the flow axis. As a result of the effect of these two forces, each particle is allowed to move on a specific axis based on its size.

After the biomarkers are attached to the nanoparticles provided with specific antibodies/peptides with ionic bonds, H-bonds and London forces in step (v), the nanoparticle-biomarker complexes moving in the microchannel structure (10) are guided into the outlet channels (12) determined by the acoustic radiation force in step (vi), thus a highly enriched product is transferred to at least one outlet channel (12). IDT (20) parameters can be adjusted depending on the type and size of the biomarker used. For example, as the size of the particles decreases, the sizes of the IDT (20) fingers, which provide the necessary acoustic pressure to manipulate the particles, change and it is necessary to operate at higher frequencies.

The microorifice structures (30) in step (vii) are configured to contract and expand with a change of temperature. This feature can be achieved by producing micro-orifice structures (30) using the soft lithography technique.

In this way, nanoparticle-biomarker pairs, separated by acoustic method and guided into the outlet channels (12) at a high purity, concentrate in large clusters while passing through the microorifice structure (30) and can be collected from the outlet of the outlet channels (12) in a more enriched state (viii). Since these clusters increase the optical signal, they facilitate the detection of nanoparticle-biomarker pairs by spectroscopy.

Optical imaging of the purified nanoparticle-biomarker pairs introduced into collection containers is carried out by the spectroscopic method selected in step (ix) based on the type of nanoparticle used.

In an embodiment of the invention, the nanoparticles in step (ii) are gold nanoparticles (AuNP). Accordingly, the imaging in step (ix) is carried out by absorbance spectroscopy. With the said method, the absorption properties of nanoparticle-biomarker pairs are measured, and thus the presence or absence of biomarkers can be analyzed and diagnosed based on the reference measurements.

In another embodiment of the invention, the nanoparticles in step (ii) are quantum dots (QD. Accordingly, the imaging in step (ix) is carried out by fluorescence spectroscopy. Unlike AuNPs, QDs emit light at various wavelengths depending on structural changes such as size or shape. Thus, quantum dots that are bound to biomarkers can be easily separated from unbound ones and identified based on their emissions. This also creates the opportunity to observe the movements of the said QD-biomarker pairs via fluorescence spectroscopy.

In another embodiment of the invention, the nanoparticles in step (ii) are carbon dots (CD). Accordingly, the imaging in step (ix) is carried out by fluorescence spectroscopy. CDs are nanoparticles that have luminescence properties like QDs, but are also preferred in terms of environmental safety because they do not contain metal. Similar to QDs, they emit light at various wavelengths based on structural changes such as size or shape, allowing carbon dots bound to biomarkers to be separated from those unbound.

Since QDs and CDs, unlike fluorescent dyes, have absorbance in a wide wavelength range and emission in a narrow range, quantum dots radiating in different colors can be used together and excited at a single wavelength. This makes it easy to use several different color radiating particles together. In another embodiment of the biomarker analysis method of the invention, QDs and CDs can be used together and the analysis of the biomarkers can be performed by fluorescence spectroscopy.

The biomarker analysis method of the invention can be modified by using the electrochemical method for analysis and diagnosis in step (ix). In the electrochemical diagnosis method, an electrical signal is applied to biomarkers in a solution-based medium by the aid of a potentiostat device, so that a current-voltage graph is created (cyclic voltammetry, CV curve) and signal analysis is performed. However, for this process, a potentiostat device, electrical equipment, thin film coatings and chemical experimental setups are needed. Therefore, in the invention, optical methods are preferred which involve techniques that are easier to access and use, such as colorimetric analysis based on light scattering and absorption, fluorescence method, and SPR technique.

In the preferred embodiment of the invention, the microchannel structure (10) in steps (iii) and (iv) has a serpentine shape. The serpentine microchannel structure (10) serves as a micromixer, enabling micro-sized mixing of solutions with high efficiency. Microscale mixing results from a vortex effect formed by the coordinated effect of the inertial force and the drag force resulting from the Dean flow. In this way, it ensures that each of the target cancer biomarkers binds to an antibody, i.e., a nanoparticle carrying the relevant ligand. Thus, as the amounts of antibodies/nanoparticles are increased, the number of biomarkers captured also increases at this rate, making enrichment of at least 90% possible.

In an embodiment of the invention, a focused interdigital transducer (Focused IDT, FIDT) is used as the interdigital transducer (20) in step (vi). In this way, higher acoustic radiation pressure can be achieved in a narrower range compared to rectangular acoustophoretic devices. A resonance frequency signal with predetermined properties is applied to the IDT electrodes (21) and stress/strain occurs within the platform (40) made of piezoelectric material. As a result, surface acoustic waves (SAW) are formed.

In the preferred embodiment of the invention, the interdigital transducer (20) in step (vi) includes two electrodes (21) positioned opposite each other on both sides of the microchannel structure (10). Said electrodes (21) are configured to overlap and produce surface acoustic waves (SAW) that create pressure points and anti-points within the microchannel structure (10). Said surface acoustic waves cause the particles to move towards pressure points or anti-points based on their volume, density and compressibility properties. If we ignore the density and compressibility values of the particles in the liquid, acoustic pressure points will manipulate large-volume structures more than small ones, allowing them to exit from the channels in the middle or on the sides. Such orientation depends on whether the acoustic pressure point occurs in the middle of the channel or in proximity to the edges. If the pressure point occurs in the middle of the channel, large-sized microstructures will align in the middle of the channel and exit from the middle channel. Those that are smaller in size, on the other hand, undergo less displacement and are discharged by the liquid thrust force from the channels close to the edge. According to this embodiment of the invention, said surface acoustic waves are formed in the form of standing surface acoustic waves (SSAW) by applying a signal with the same resonance frequency to the two opposite electrodes (21) of the interdigital transducer (20) by the aid of a network analyzer (3). By trapping the particle in the pressure points and anti-points, SSAWs make acoustophoresis possible.

According to this embodiment of the invention, the effect of the acoustic pressure force on the particle is defined by the function below. ${F}_{SSAW} = - \left(\frac{{πP}_{0}^{2} {Vβ}_{m}}{2 λ}\right) ∅ \left(β, ρ\right) sin \left(2ky\right)$ $∅ \left(β, ρ\right) = \left(\frac{5 {ρ}_{ρ} - 2 {ρ}_{m}}{2 {ρ}_{ρ} + {ρ}_{m}}\right) - \left(\frac{{β}_{ρ}}{{β}_{m}}\right)$

Here; F_{SSAW} is acoustic radiation force; P₀ is acoustic pressure amplitude; V is particle volume; λ is wavelength; ρₚ and ρₘ are densities of the particle and the medium; βₚ and βₘ are compressibility of the particle and the medium; k is wave number; y is the distance from the initial position of the particle to the pressure point, and Φ(β, p) is the acoustic contrast factor. In an embodiment of the invention, signals with a resonance frequency of 10-15MHz and an amplitude of 19-23 Vₚₖ₋ₚₖ are sent to the electrodes (21). It has been observed that the appropriate operating range is achieved when these parameters are used. If the amplitude falls below this range, sufficient acoustic pressure is not created. At amplitudes higher than this range, an undesirable increase in temperature occurs for biological applications.

In an embodiment of the invention, the heating in steps (viii) and (ix) is carried out in the range of 20-30°C so that the biomarkers are not damaged. According to this embodiment of the invention, said heating is carried out by a heater (50) provided on the platform (40).

The invention also relates to a method for manufacturing a hybrid microfluidic chip (1) suitable for use in the processing and analysis of biomarkers, comprising the following steps:
a. Preparation of a platform (40) including two electrodes (21) of the interdigital transducer (20)
b. Preparation of the microchannel structure (10)
c. Coupling the platform (40) prepared in step (a) and the microchannel structure (10)
d. Preparation of the microorifice structure (30)
e. Coupling the microorifice structure (30) with the platform (40) prepared in step (c)
f. Placing a heater (50) under the microorifice structure (30)

In an embodiment of the manufacturing method of the invention, step (a) comprises the following substeps:
a-i. Providing a piezoelectric crystal disk to be used as a substrate
a-ii. Coating the disk with a metal material after having been cleaned
a-iii. Applying heat treatment to the disk coated with the metal material
a-iv. Coating the heat-treated disk with a photoresist material
a-v. Providing an acetate mask to form said electrodes (21) on the disk covered with the photoresist material
a-vi. Aligning the disk coated with the photoresist material and the acetate mask and placing them in a lithography machine
a-vii. Carrying out the developing process in the lithography machine until the shape of the electrodes (21) emerges
a-viii. Washing and drying the disk developed
a-ix. Subjecting the disk to metal etching and removing the photoresist layer, making the electrodes (21) thereon visible
a-x. Re-washing and drying the disk subjected to metal etching

In step (a) of the manufacturing method of the invention, a platform (40) including an interdigital transducer (20), in other words, an active separation (acoustophoresis) device, is prepared. In this step, a platform (40) including the electrodes (21) of the interdigital transducer (20) that are suitable for operation at high frequencies such as 50-300Mhz is obtained.

In an embodiment of the invention, the disk used as a substrate in step (a-i) is a 4-inch, 0.1-1 mm thick, Y-cut LiNbO₃ piezoelectric crystal material. Substrate cleaning is a very important process before the metal plating stage. Accordingly, in order to achieve a proper coating in step (a-ii), said disk is first washed in an ultrasonic washing machine in ethanol (99.95%) for 5 minutes, and then washed with deionized water (DI) and dried with an N₂ gas pump. In an embodiment of the invention, the metal coating process in step (a-ii) is carried out with a thermal evaporator machine at ~200nm. Accordingly, the relevant surface on the machine is cleaned with IPA (isopropyl alcohol), washed with DI water and dried with an N₂ gas pump. In the preferred embodiment of the invention, chromium (Cr), gold (Au) or silver (Ag) material with at least 99.95% purity is used in steps (a-ii).

In step (a-iii), heat treatment (pre-heating) is applied to prepare the surface covered with metal material for photoresist material coating. In an embodiment of the invention, said heat treatment is applied at 110°C for 120 seconds.

The piezoelectric disk, which is prepared for photoresist material coating, is fixed to a rotary dip coater (spin coater) by vacuum in steps (a-iv) and is coated with AZ5214E photoresist solution, preferably at a speed of 4000rpm, in approximately 30 seconds. In order to cure the solution on the disc, heat treatment (post-heating) is applied, preferably at 110°C for 60 seconds. The thickness after coating is around 1200-1500nm.

Within the scope of step (a-v), the acetate mask provided is sensitive to ultraviolet light. In steps (a-vi), the acetate mask (IDT mask) and the photoresist-coated piezoelectric disc are properly aligned and placed in the lithography machine. Alignment is very important at this stage because surface acoustic waves travel in the direction of the crystal cut. As a lithography machine, Midas System Co., Ltd., MDA-60MS Mask Aligner 4" was used in the study.

The developing process in steps (a-vii) is carried out by UV dosing in the lithography machine. In an embodiment of the invention, UV dosing is performed at 230mJ/cm² for 15 seconds. The developing process is continued using AZ726MIF solvent until the shape of the IDT electrodes (21) emerges, i.e., for approximately 30 seconds. The developed disk is then washed with DI water as part of step (a-viii) and gently dried with N₂ gas.

In order to make the electrodes (21) developed on the disc visible, the disc must be subjected to metal etching (a-ix). In this step, the disk is treated with metal corrosive acid and photoresist remover, respectively. Since the area covered with the photoresist material where the mask is located does not react with metal corrosive acid, the shapes of metal electrodes appear on these areas. Said metal corrosive acid is selected depending on the metal material used in the metal plating. In an embodiment of the invention, Chromium etchant 1020C is used as a metal corrosive acid. Afterwards, the photoresist layer on the visible electrodes (21) is cleaned, preferably using AZ100 remover. The disk, whose metal and photoresist layers have been removed, is finally washed with ethanol (99.95%), rinsed with DI water and dried with N₂ gas in step (a-x).

In step (b) of the manufacturing method of the invention, it is aimed to obtain a microchannel structure (10) made of PDMS material. For this purpose, the processes performed are, in the most general terms, as follows: obtaining a mold having the pattern of the microchannel structure (10), and obtaining the microchannel structure (10) by pouring the PDMS material onto the mold.

In an embodiment of the manufacturing method of the invention, step (b) comprises the following substeps:
b-i. Providing a substrate for use as a mold
b-ii. Cleaning the substrate and coating it with a photoresist material
b-iii. Curing the photoresist material
b-iv. Providing an acetate mask to form a curved microchannel structure pattern on the substrate coated with the photoresist material
b-v. Aligning the substrate coated with the photoresist material and the acetate mask and placing them in a lithography machine
b-vi. Carrying out the developing process in the lithography machine until the pattern of the microchannel structure emerges
b-vii. Washing and drying the substrate on which the pattern of the microchannel structure (10) is developed
b-viii. Preparation of a PDMS material in a separate location
b-ix. Taking the microchannel mold into a container and pouring the fluidized PDMS material thereon
b-x. Placing the container in a vacuum oven and curing the PDMS material
b-xi. Separating the PDSM material cured on the microchannel mold from the microchannel mold in order to obtain the microchannel structure (10)

In the preferred embodiment of the invention, after the substrate made of silicone material is provided in step (b-i), it is washed with ethanol (99.95%), rinsed with DI water and dried with N₂ gas in step (b-ii), and then it is fastened in a rotary and dip coater (spin coater) through vacuum and covered with SU8 photoresist solution in approximately 30 seconds, preferably at a speed of 4000rpm. In order to cure the solution on the substrate, heat treatment (post-heating) is applied, preferably at 110°C for 60 seconds (b-iii).

Within the scope of step (b-iv), the acetate mask provided is sensitive to ultraviolet light, allowing the pattern of the microchannel structure (10) to be formed on the substrate. In step (b-v), the acetate mask (microchannel mask) and the photoresist-coated substrate are aligned and placed in the lithography machine. As a lithography machine, Midas System Co., Ltd., MDA-60MS Mask Aligner 4" was used in the study.

The developing process in steps (b-vi) is carried out by UV dosing in the lithography machine. In an embodiment of the invention, UV dosing is performed at 230mJ/cm² for 15 seconds. The developing process is continued using SU8 developer until the curved pattern of the microchannel structure (10) emerges, i.e., for approximately 30 seconds. The substrate, on which the pattern of the microchannel structure (10) is developed, is washed with isopropyl alcohol (IPA) and gently dried with N₂ gas as part of step (b-vii).

Since the PDMS material that will form the said microchannel structure (10) must be in fluid form so as to be molded, it must be prepared immediately before molding. Accordingly, in an embodiment of the invention, 5 g of silicone elastomer curing agent is added on 50 g of silicone elastomer base (Sylgard^{™}) in step (b-viii) and mixed until a homogeneous mixture is obtained. Afterwards, in step (b-ix), the mold prepared in step (b-vii) is placed in a glass container, preferably with aluminum foil laid therein, or a plastic petri dish without foil, and the polydimethylsiloxane (PDMS) material prepared in step (b-viii) is poured thereon while it is still in a fluid state, and before transitioning to the soft solid phase. In an embodiment of the invention, it is possible to produce multiple microchannel structures (10) by pouring a single PDMS so as to enclosing a plurality of molds in a container.

The curing process (b-x) of the PDMS material that has been poured is preferably carried out in a vacuum oven (Sheldon Manufacturing, Inc.) at 70°C. It is continued for 2-3 hours. The advantage of the vacuum environment is to eliminate air bubbles that will be formed in the PDMS material. The bubbles formed during the pouring process in PDMS, which is still in a fluid state, are removed by vacuum to produce properly shaped microchannel structures (10). After curing, the soft solid PDMS microchannel structures (10) in the mold are appropriately separated by means of a scalpel (b-xi).

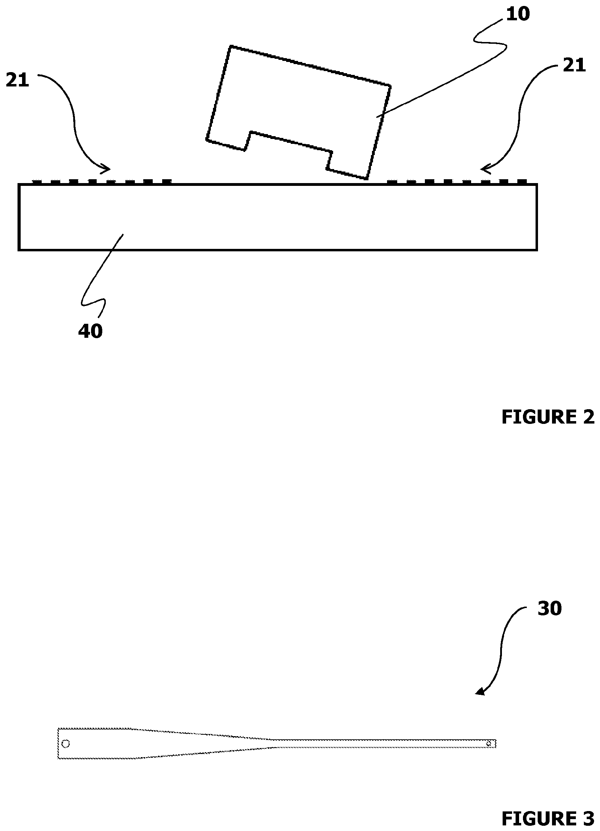

In step (c) of the manufacturing method of the invention, it is aimed to integrate the microchannel structure (10) obtained in step (b) into the platform (40) obtained in step (a). Said integration is depicted in Figure 2. Thus, acoustic separation and micromixing functions can be achieved on a single micro-sized platform. It has been observed that product efficiency and diagnostic reliability is surprisingly increased with the coordinated effect herein.

In an embodiment of the manufacturing method of the invention, step (c) comprises the following substeps:
c-i. Oxidizing the platform (40) prepared in step (a) and subjecting it to plasma activation
c-ii. Oxidizing the microchannel structure (10) prepared in step (b) and subjecting it to plasma activation
c-iii. Aligning and coupling the platform (40) and the microchannel structure (10) subjected to plasma activation process
c-iv. Keeping the hybrid platform (40) obtained after the coupling process under vacuum

In the preferred embodiment of the invention, the plasma activation process in steps (c-i) and (c-ii) is carried out in an oxygen plasma machine (Cute-MP, Femto Science, Korea) at 70W power, repeated three times, for 60 seconds. With the plasma activation process, organic components that may be present on the materials are removed. As a result of this process, silanol (SiOH) groups remain on the surface of the material, which make the material more hydrophilic and thus facilitates the coupling process.

Again, in the preferred embodiment of the invention, the alignment process in step (c-iii) includes placing the electrodes (21) of the interdigital transducer (20) in opposite positions on both sides of the microchannel structure. Said alignment is carried out under a microscope and is of great importance in ensuring the desired product efficiency of the hybrid platform (40) to be formed. What is meant by the opposite positioning of the electrodes (21) is that, when the interdigital transducer (20) is in use, said electrodes (21) are placed in a such way to create standing surface acoustic waves (SSAW) overlapping each other within the microchannel structure (10), thus creating pressure points and anti-points. In this step, said coupling is affected by the silanol structures provided by the plasma activation process forming Si-O-Si bonds between the microchannel structure (10) made of PDMS material and the platform (40). These bonds form a water-tight interface between the microchannel structure (10) and the platform (40).

As a result of the alignment process, the platform (40) including the integrated/coupled microchannel structure (10) is kept under vacuum, preferably at 60°C, for 1-2 hours (c-iv). Thus, the hybrid platform (40) structure is made to be more robust.

In step (d) of the manufacturing method of the invention, it is aimed to obtain a microorifice structure (30) made of PDMS material. For this purpose, the processes performed are very similar to step (b) of preparing the microchannel structure (10) and are, in the most general terms, as follows: obtaining a mold having the pattern of the microorifice structure (30), and obtaining the microorifice structure (30) by pouring the PDMS material onto the mold. The cross-sectional view of the microorifice structure (30) obtained according to an embodiment of the invention is represented in Figure 3.

In an embodiment of the manufacturing method of the invention, step (d) comprises the following sub-steps:
d-i. Providing a substrate for use as a mold
d-ii. Cleaning the substrate and coating it with a photoresist material
d-iii. Curing the photoresist material
d-iv. Providing an acetate mask to form a curved microorifice structure pattern on the substrate coated with the photoresist material
d-v. Aligning the substrate coated with the photoresist material and the acetate mask and placing them in a lithography machine
d-vi. Carrying out the developing process in the lithography machine until the pattern of the microorifice structure (30) emerges
d-vii. Washing and drying the substrate on which the pattern of the microorifice structure (30) is developed
d-viii. Preparation of a PDMS material in a separate location
d-ix. Taking the microorifice mold into a container and pouring the fluidized PDMS material thereon
d-x. Placing the container in a vacuum oven and curing the PDMS material
d-xi. Separating the PDSM material cured on the microorifice mold from the microorifice mold in order to obtain the microorifice structure (30)

In the preferred embodiment of the invention, after the substrate made of silicone material is provided in step (d-i), it is washed with ethanol (99.95%), rinsed with DI water and dried with N₂ gas in step (d-ii), and then it is fastened in a rotary and dip coater (spin coater) through vacuum and covered with SU8 photoresist solution in approximately 30 seconds, preferably at a speed of 4000rpm. In order to cure the solution on the substrate, heat treatment (post-heating) is applied, preferably at 110°C for 60 seconds (d-iii).

Within the scope of step (d-iv), the acetate mask provided is sensitive to ultraviolet light, allowing the pattern of the microorifice structure (30) to be formed on the substrate. In step (d-v), the acetate mask (microorifice mask) and the photoresist-coated substrate are aligned and placed in the lithography machine. As a lithography machine, Midas System Co., Ltd., MDA-60MS Mask Aligner 4" was used in the study.

The developing process in steps (d-vi) is carried out by UV dosing in the lithography machine. In an embodiment of the invention, UV dosing is performed at 230mJ/cm² for 15 seconds. The developing process is continued using SU8 developer until the curved pattern of the microorifice structure (30) emerges, i.e., for approximately 30 seconds. The substrate, on which the pattern of the microorifice structure (30) is developed, is washed with isopropyl alcohol (IPA) and gently dried with N₂ gas as part of step (d-vii).

Since the PDMS material that will form the said microorifice structure (30) must be in fluid form so as to be molded, it must be prepared immediately before molding. Accordingly, in an embodiment of the invention, 5 g of silicone elastomer curing agent is added on 50 g of silicone elastomer base (Sylgard^{™}) in step (d-viii) and mixed until a homogeneous mixture is obtained. Afterwards, in step (d-ix), the mold prepared in step (d-vii) is placed in a glass container, preferably with aluminum foil laid therein, or a plastic petri dish without foil, and the polydimethylsiloxane (PDMS) material prepared in step (d-viii) is poured thereon while it is still in a fluid state, and before transitioning to the soft solid phase. In an embodiment of the invention, it is possible to produce multiple microorifice structures (30) by pouring a single PDMS so as to enclose a plurality of molds in a container.

The curing process (d-x) of the PDMS material that has been poured is preferably carried out in a vacuum oven (Sheldon Manufacturing, Inc.) at 70°C. It is continued for 2-3 hours. The advantage of the vacuum environment is to eliminate air bubbles that will be formed in the PDMS material. The bubbles formed during the pouring process in PDMS, which is still in a fluid state, are removed by vacuum to produce properly shaped microorifice structures (30). After curing, the soft solid PDMS microorifice structures (30) in the mold are appropriately separated by means of a scalpel (d-xi).

In an embodiment of the invention, step (e) of coupling the platform (40) obtained in step (c) with the microorifice structure (30) prepared in step (d) is carried out with the following substeps.
e-i. Cleaning and oxidizing the platform (40) prepared in step (c) and subjecting it to plasma activation
e-ii. Cleaning and oxidizing the microorifice structure (30) prepared in step (d) and subjecting it to plasma activation
e-iii. Aligning and coupling the platform (40) and the microorifice structure (30) subjected to plasma activation process
e-iv. Keeping the hybrid platform (40) obtained after the coupling process under vacuum

Accordingly, the cleaning process in steps (e-i) and (e-ii) is carried out using isopropyl alcohol and deionized water, followed by drying with N₂ gas. Again, the plasma activation process in these steps is carried out in an oxygen plasma machine (Cute-MP, Femto Science, Korea) at 70W power, repeated three times, for 60 seconds.

With the plasma activation process, organic components that may be present on the materials are removed. As a result of this process, silanol (SiOH) groups remain on the surface of the material, which make the material more hydrophilic and thus facilitates the coupling process. In step (e-iii), the activated surfaces are aligned and adhered by means of the chemical bond formed by the activation process.

After the alignment process, the integration is reinforced by keeping the platform (40) under vacuum, preferably at 60°C, for 1-2 hours (e-iv). Thus, the platform (40) having the interdigital transducer (20), microchannel structure (10) and microorifice structure (30) thereon is obtained.

In an embodiment of the invention, step (f) is carried out with the following substeps.
f-i. Coating a film made of indium tin oxide (ITO) material on the platform (40) obtained in step (e)
f-ii. forming the heater (50) having a palmated structure by any of the microfabrication, wet etching or dry etching methods

In the preferred embodiment of the invention, the coating process in step (f-i) is carried out by the sputter deposition method. In step (f-ii), said palmated structure is formed so as to be aligned under the microorifice structure (30).

When voltage is applied to this heater (50), which is incorporated in step (f) into the microfluidic chip (1) obtained on the platform (40) by means of a DC power supply, heating is achieved on the surface of the platform (40). In this embodiment of the invention, a transparent heater can be provided which allows viewing under a microscope.

In another embodiment of the invention, said heater can be provided externally without being incorporated into the microfluidic chip (1) structure. In this embodiment, the heater may be a peltier.

With the microfluidic chip (1) described in the invention, a microdevice is provided which is suitable for use in the early diagnosis of cancer and cancer variants. Said device contains a hybrid of active (acoustophoresis) and passive (microchannel structure) separation mechanisms and surprisingly improves the product efficiency obtained from the outlet of the device, by means of the resulting coordinated effect. Said coordinated effect is to ensure that biomarkers derived from cancer cells are bound to nanoparticles in the micromixer and collected at a high purification rate from the desired outlet channel after separation by acoustic method.

The novelty of the invention is not only based on the coordinated effect resulting from the integral inclusion of active and passive separation mechanisms. In addition, the microorifice structures (30) included in the microchannel structure (10) of the microfluidic chip (1) of the invention contract and expand by the action of a heater, so that the nanoparticle-biomarker pairs, which are already highly purified, are concentrated in large clusters and discharged from the microfluidic chip (1) system. The fact that said purification and concentration processes are carried out as a whole on a single microdevice has a synergistic effect, surprisingly increasing the product yield and supporting the reliability of the analysis performed in optical diagnostic methods. In addition, the microfluidic chip (1) of the invention offers simultaneous optical observation by providing all these elements on a single microdevice and makes it possible to monitor the movements of the nanoparticle-biomarker pairs. In this way, particle analyzes can be performed with optical diagnostic methods such as fluorescence or absorbance spectroscopy.

## Claims

1. A hybrid microfluidic chip (1) suitable for use in the processing and analysis of biomarkers, comprising on a single platform (40) made of piezoelectric material, in combined manner:
- at least one microchannel structure (10) having a curved structure with at least one inlet channel (11) at one end and a plurality of outlet channels (12) at the other end,
- an interdigital transducer (20) configured to convert electrical waves into surface acoustic waves, comprising two electrodes (21) positioned immediately before the outlet channels (12) with respect to the flow direction,
- a microorifice structure (30) provided on at least one outlet channel (12), configured to contract and expand with temperature change,
wherein the microfluidic chip (1) further comprising a heater (50) positioned under the microorifice structure (30).

2. The microfluidic chip (1) according to claim 1, wherein said microchannel structure (10) has a serpentine shape.

3. The microfluidic chip (1) according to claim 1, wherein said electrodes (21) are positioned opposite each other on both sides of the microchannel structure (10).

4. The microfluidic chip (1) according to claim 1, wherein the microchannel structure (10) comprises two inlet channels (11), one is suitable for feeding of biomarkers and the other is suitable for feeding of nanoparticles.

5. A biomarker analysis assembly comprising a microfluidic chip (1) according to any one of the preceding claims, which is suitable for use in the diagnosis of cancer and related diseases, further comprising;
- a network analyzer for determining the characteristic features of the microfluidic chip (1), by sending signals from one side and reading signals from the opposite electrode (21) to read the resonance frequency and impedance of the interdigital transducer (20),
- a signal generator acting as a signal source,
- a signal amplifier for increasing the strength of signals sent by the signal generator,
- at least one, preferably two, micropumps for feeding nanoparticles and biomarkers from the inlet channel (11) at a flow rate,
- collection containers allowing nanoparticle-biomarker pairs formed along the microchannel structure (10) to be collected from the outlet channels (12),
- an optical microscope enabling the observation of the movements of the nanoparticle-biomarker pairs in the collection containers and thus the diagnosis of the biomarkers.

6. A biomarker analysis method using a microfluidic chip (1) according to any one of claims 1 to 5, comprising the following steps:
i. Providing the biomarkers to be analyzed in order to prepare a biomarker solution
ii. Providing nanoparticles containing surface ligands in a form to capture the biomarkers in order to prepare a nanoparticle solution
iii. Feeding the biomarker solution into the microchannel structure (10) through an inlet channel (11)
iv. Feeding the nanoparticle solution into the microchannel structure (10) through another inlet channel (11)
v. Formation of nanoparticle-biomarker pairs by the micromixing effect to which the biomarkers and nanoparticles are subjected in the microchannel structure (10)
vi. Separation of the nanoparticle-biomarker pairs by means of the surface acoustic waves generated by the interdigital transducer (20), based on their size, while they move through the microchannel structure (10) under the influence of the drag force, and guiding them into different outlet channels (12)
vii. Simultaneous heating of the nanoparticle-biomarker pairs that have been separated based on their sizes, while they are passed through the microorifice structures (30) disposed in the outlet channels (12)
viii. Introducing the nanoparticle-biomarker pairs, which are aggregated by heating while being passed through the microorifice structure (30), into the collection containers
ix. Performing optical imaging of the nanoparticle-biomarker pairs introduced into the collection containers, and the diagnosis of the biomarkers

7. The biomarker analysis method according to claim 6, wherein said nanoparticles in step (ii) are gold nanoparticles (AuNP).

8. The biomarker analysis method according to claim 7, wherein said analysis in step (ix) is carried out by absorbance spectroscopy.

9. The biomarker analysis method according to claim 6, wherein said nanoparticles in step (ii) are quantum dots (QD).

10. The biomarker analysis method according to claim 6, wherein said nanoparticles in step (ii) are carbon dots (CD).

11. The biomarker analysis method according to any one of claim 9 or 10, wherein said analysis in step (ix) is carried out by fluorescence spectroscopy.

12. The biomarker analysis method according to claim 6, wherein said microchannel structure (10) has a serpentine shape.

13. The biomarker analysis method according to claim 6, wherein said heating process in steps (vii) and (viii) is carried out at 20-30°C.

14. A method for manufacturing the microfluidic chip (1) according to any one of claims 1 to 5, comprising the following steps:
a. Preparation of a platform (40) including two electrodes (21) of the interdigital transducer (20)
b. Preparation of the microchannel structure (10)
c. Coupling the platform (40) prepared in step (a) and the microchannel structure (10)
d. Preparation of the microorifice structure (30)
e. Coupling the microorifice structure (30) with the platform (40) prepared in step (c)
f. Placing a heater (50) under the microorifice structure (30)

15. Use of the microfluidic chip (1) according to any one of claims 1 to 5 in the diagnosis of cancer and cancer-related diseases.

## Patentansprüche

1. Ein hybrider Mikrofluidik-Chip (1), der zur Verwendung bei der Verarbeitung und Analyse von Biomarkern geeignet ist und auf einer einzigen Plattform (40) aus piezoelektrischem Material in kombinierter Anordnung Folgendes umfasst:
- mindestens eine Mikrokanalstruktur (10) mit einer gekrümmten Struktur, die an einem Ende mindestens einen Einlasskanal (11) und am anderen Ende mehrere Auslasskanäle (12) aufweist,
- einen Interdigitalwandler (20), der so ausgelegt ist, dass er elektrische Wellen in akustische Oberflächenwellen umwandelt, und der zwei Elektroden (21) umfasst, die in Strömungsrichtung unmittelbar vor den Auslasskanälen (12) angeordnet sind,
- eine Mikroöffnungsstruktur (30), die an mindestens einem Auslasskanal (12) vorgesehen ist und so ausgelegt ist, dass sie sich bei Temperaturänderungen zusammenzieht und ausdehnt,
wobei der Mikrofluidik-Chip (1) ferner eine Heizvorrichtung (50) umfasst, die unterhalb der Mikroöffnungsstruktur (30) angeordnet ist.

2. Mikrofluidik-Chip (1) nach Anspruch 1, wobei die Mikrokanalstruktur (10) eine Serpentinenform aufweist.

3. Der Mikrofluidik-Chip (1) nach Anspruch 1, wobei die Elektroden (21) einander gegenüberliegend auf beiden Seiten der Mikrokanalstruktur (10) angeordnet sind.

4. Mikrofluidik-Chip (1) nach Anspruch 1, wobei die Mikrokanalstruktur (10) zwei Einlasskanäle (11) umfasst, von denen einer zur Zuführung von Biomarkern und der andere zur Zuführung von Nanopartikeln geeignet ist.

5. Eine Biomarker-Analysevorrichtung, die einen Mikrofluidik-Chip (1) gemäß einem der vorstehenden Ansprüche umfasst, der zur Verwendung bei der Diagnose von Krebs und damit verbundenen Erkrankungen geeignet ist, und ferner umfasst:
- einen Netzwerkanalysator zur Bestimmung der charakteristischen Merkmale des Mikrofluidik-Chips (1), indem Signale von einer Seite gesendet und Signale von der gegenüberliegenden Elektrode (21) gelesen werden, um die Resonanzfrequenz und die Impedanz des interdigitalen Wandlers (20) zu ermitteln,
- einen Signalgenerator, der als Signalquelle dient,
- einen Signalverstärker zur Verstärkung der vom Signalgenerator gesendeten Signale,
- mindestens eine, vorzugsweise zwei Mikropumpen zum Zuführen von Nanopartikeln und Biomarkern aus dem Einlasskanal (11) mit einer bestimmten Durchflussrate,
- Sammelbehälter, die es ermöglichen, entlang der Mikrokanalstruktur (10) gebildete Nanopartikel-Biomarker-Paare aus den Auslasskanälen (12) zu sammeln,
- ein optisches Mikroskop, das die Beobachtung der Bewegungen der Nanopartikel-Biomarker-Paare in den Auffangbehältern und damit die Diagnose der Biomarker ermöglicht.

6. Verfahren zur Biomarker-Analyse unter Verwendung eines Mikrofluidik-Chips (1) gemäß einem der Ansprüche 1 bis 5, umfassend die folgenden Schritte:
i. Bereitstellen der zu analysierenden Biomarker zur Herstellung einer BiomarkerLösung
ii. Bereitstellen von Nanopartikeln, die Oberflächenliganden in einer Form enthalten, die es ermöglicht, die Biomarker einzufangen, um eine Nanopartikel-Lösung herzustellen
iii. Einleiten der Biomarkerlösung in die Mikrokanalstruktur (10) über einen Einlasskanal (11)
iv. Einleiten der Nanopartikel-Lösung in die Mikrokanalstruktur (10) über einen weiteren Einlasskanal (11)
v. Bildung von Nanopartikel-Biomarker-Paaren durch den Mikromisch-Effekt, dem die Biomarker und Nanopartikel in der Mikrokanalstruktur (10) ausgesetzt sind
vi. Trennung der Nanopartikel-Biomarker-Paare anhand ihrer Größe mittels der vom Interdigitalwandler (20) erzeugten akustischen Oberflächenwellen, während sie sich unter dem Einfluss der Widerstandskraft durch die Mikrokanalstruktur (10) bewegen, und ihre Leitung in verschiedene Auslasskanäle (12)
vii. Gleichzeitige Erwärmung der nach ihrer Größe getrennten Nanopartikel-Biomarker-Paare, während sie durch die in den Auslasskanälen (12) angeordneten Mikroöffnungsstrukturen (30) geleitet werden
viii. Einbringen der Nanopartikel-Biomarker-Paare, die durch die Erwärmung während des Durchlaufs durch die Mikroöffnungsstruktur (30) aggregiert wurden, in die Auffangbehälter
ix. Durchführung einer optischen Abbildung der in die Auffangbehälter eingeleiteten Nanopartikel-Biomarker-Paare und der Diagnose der Biomarker

7. Verfahren zur Biomarkeranalyse nach Anspruch 6, wobei die Nanopartikel in Schritt (ii) Goldnanopartikel (AuNP) sind.

8. Verfahren zur Biomarkeranalyse nach Anspruch 7, wobei die Analyse in Schritt (ix) mittels Absorptionsspektroskopie durchgeführt wird.

9. Verfahren zur Biomarkeranalyse nach Anspruch 6, wobei die Nanopartikel in Schritt (ii) Quantenpunkte (QD) sind.

10. Verfahren zur Biomarkeranalyse nach Anspruch 6, wobei die Nanopartikel in Schritt (ii) Kohlenstoffpunkte (CD) sind.

11. Verfahren zur Biomarker-Analyse gemäß einem der Ansprüche 9 oder 10, wobei die Analyse in Schritt (ix) mittels Fluoreszenzspektroskopie durchgeführt wird.

12. Verfahren zur Biomarkeranalyse nach Anspruch 6, wobei die Mikrokanalstruktur (10) eine Serpentinenform aufweist.

13. Verfahren zur Biomarkeranalyse nach Anspruch 6, wobei der Erhitzungsvorgang in den Schritten (vii) und (viii) bei 20-30 °C durchgeführt wird.

14. Verfahren zur Herstellung des Mikrofluidik-Chips (1) gemäß einem der Ansprüche 1 bis 5, umfassend die folgenden Schritte:
a. Herstellung einer Plattform (40) mit zwei Elektroden (21) des interdigitalen Wandlers (20)
b. Herstellung der Mikrokanalstruktur (10)
c. Kopplung der in Schritt (a) hergestellten Plattform (40) mit der Mikrokanalstruktur (10)
d. Herstellung der Mikroöffnungsstruktur (30)
e. Kopplung der Mikroöffnungsstruktur (30) mit der in Schritt (c) hergestellten Plattform (40)
f. Anordnen einer Heizvorrichtung (50) unter der Mikroöffnungsstruktur (30)

15. Verwendung des Mikrofluidik-Chips (1) gemäß einem der Ansprüche 1 bis 5 bei der Diagnose von Krebs und krebsbedingten Erkrankungen.

## Revendications

1. Puce microfluidique (1) hybride appropriée pour être utilisée dans le traitement et l'analyse de biomarqueurs, comprenant sur une plateforme unique (40) réalisée en un matériau piézoélectrique, de manière combinée :
- au moins une structure de microcanal (10) présentant une structure courbée avec au moins un canal d'entrée (11) à une extrémité et une pluralité de canaux de sortie (12) à l'autre extrémité,
- un transducteur interdigité (20) configuré pour convertir des ondes électriques en ondes acoustiques de surface, comprenant deux électrodes (21) positionnées immédiatement avant les canaux de sortie (12) par rapport au sens d'écoulement,
- une structure de micro-orifice (30) prévue sur au moins un canal de sortie (12), configurée pour se contracter et se dilater en fonction d'un changement de température,
dans laquelle la puce microfluidique (1) comprend en outre un élément chauffant (50) positionné sous la structure de micro-orifice (30).

2. Puce microfluidique (1) selon la revendication 1, dans laquelle ladite structure de microcanal (10) présente une forme en serpentin.

3. Puce microfluidique (1) selon la revendication 1, dans laquelle lesdites électrodes (21) sont positionnées en regard l'une de l'autre de part et d'autre de la structure de microcanal (10).

4. Puce microfluidique (1) selon la revendication 1, dans laquelle la structure de microcanal (10) comprend deux canaux d'entrée (11), l'un étant approprié pour l'alimentation en biomarqueurs et l'autre étant approprié pour l'alimentation en nanoparticules.

5. Ensemble d'analyse de biomarqueurs comprenant une puce microfluidique (1) selon l'une quelconque des revendications précédentes, qui est approprié pour être utilisé dans le diagnostic du cancer et de maladies associées, comprenant en outre :
- un analyseur de réseau pour déterminer les caractéristiques de la puce microfluidique (1), en envoyant des signaux à partir d'un côté et en lisant des signaux à partir de l'électrode (21) opposée afin de lire la fréquence de résonance et l'impédance du transducteur interdigité (20),
- un générateur de signaux servant de source de signaux,
- un amplificateur de signaux pour augmenter l'intensité des signaux envoyés par le générateur de signaux,
- au moins une, de préférence deux, micropompes pour alimenter des nanoparticules et des biomarqueurs à partir du canal d'entrée (11) à un débit déterminé,
- des récipients de collecte permettant de collecter, à partir des canaux de sortie (12), des paires nanoparticule-biomarqueur formées le long de la structure de microcanal (10),
- un microscope optique permettant d'observer les mouvements des paires nanoparticule-biomarqueur dans les récipients de collecte et de réaliser ainsi le diagnostic des biomarqueurs.

6. Procédé d'analyse de biomarqueurs utilisant une puce microfluidique (1) selon l'une quelconque des revendications 1 à 5, comprenant les étapes suivantes :
i. la fourniture des biomarqueurs à analyser afin de préparer une solution de biomarqueurs ;
ii. la fourniture de nanoparticules contenant des ligands de surface sous une forme permettant de capturer les biomarqueurs afin de préparer une solution de nanoparticules ;
iii. l'introduction de la solution de biomarqueurs dans la structure de microcanal (10) à travers un canal d'entrée (11) ;
iv. l'introduction de la solution de nanoparticules dans la structure de microcanal (10) à travers un autre canal d'entrée (11) ;
v. la formation de paires nanoparticule-biomarqueur sous l'effet de micromélange auquel les biomarqueurs et les nanoparticules sont soumis dans la structure de microcanal (10) ;
vi. la séparation des paires nanoparticule-biomarqueur au moyen des ondes acoustiques de surface générées par le transducteur interdigité (20), sur la base de leur taille, pendant qu'elles se déplacent à travers la structure de microcanal (10) sous l'effet de la force de traînée, et leur guidage vers différents canaux de sortie (12) ;
vii. le chauffage simultané des paires nanoparticule-biomarqueur ayant été séparées sur la base de leurs tailles, lorsqu'on les fait passer à travers les structures de micro-orifice (30) disposées dans les canaux de sortie (12) ;
viii. l'introduction des paires nanoparticule-biomarqueur, agglomérées par chauffage lorsqu'on les fait passer à travers la structure de micro-orifice (30), dans les récipients de collecte ;
ix. la réalisation d'une imagerie optique des paires nanoparticule-biomarqueur introduites dans les récipients de collecte, et le diagnostic des biomarqueurs.

7. Procédé d'analyse de biomarqueurs selon la revendication 6, dans lequel lesdites nanoparticules à l'étape (ii) sont des nanoparticules d'or (AuNP).

8. Procédé d'analyse de biomarqueurs selon la revendication 7, dans lequel ladite analyse à l'étape (ix) est effectuée par spectroscopie d'absorbance.

9. Procédé d'analyse de biomarqueurs selon la revendication 6, dans lequel lesdites nanoparticules à l'étape (ii) sont des points quantiques (QD).

10. Procédé d'analyse de biomarqueurs selon la revendication 6, dans lequel lesdites nanoparticules à l'étape (ii) sont des points de carbone (CD).

11. Procédé d'analyse de biomarqueurs selon l'une quelconque des revendications 9 ou 10, dans lequel ladite analyse à l'étape (ix) est effectuée par spectroscopie de fluorescence.

12. Procédé d'analyse de biomarqueurs selon la revendication 6, dans lequel ladite structure de microcanal (10) présente une forme en serpentin.

13. Procédé d'analyse de biomarqueurs selon la revendication 6, dans lequel ledit processus de chauffage aux étapes (vii) et (viii) est effectué à 20-30 °C.

14. Procédé de fabrication de la puce microfluidique (1) selon l'une quelconque des revendications 1 à 5, comprenant les étapes suivantes :
a. la préparation d'une plateforme (40) comprenant deux électrodes (21) du transducteur interdigité (20) ;
b. la préparation de la structure de microcanal (10) ;
c. le couplage de la plateforme (40) préparée à l'étape (a) et de la structure de microcanal (10) ;
d. la préparation de la structure de micro-orifice (30) ;
e. le couplage de la structure de micro-orifice (30) avec la plateforme (40) préparée à l'étape (c) ;
f. le positionnement d'un élément chauffant (50) sous la structure de micro-orifice (30).

15. Utilisation de la puce microfluidique (1) selon l'une quelconque des revendications 1 à 5 dans le diagnostic du cancer et de maladies liées au cancer.
